# EUROPEAN PATENT SPECIFICATION

(11) **EP 3 093 859 B1**
(45) Date of publication and mention of the grant of the patent: **18.07.2018**
(21) Application number: 16169073.0
(22) Date of filing: 10.05.2016
(51) Int. Cl.: H01F 27/28, H01F 29/10, G01D 5/22

(54) **VARIABLE DIFFERENTIAL TRANSFORMER POSITION SENSOR WITH A TRAPEZOIDAL PRIMARY COIL**
POSITIONSSENSOR FÜR VARIABLEN DIFFERENTIALTRANSFORMATOR MIT EINER TRAPEZFÖRMIGEN PRIMÄRSPULE
CAPTEUR DE POSITION À TRANSFORMATEUR DIFFÉRENTIEL VARIABLE AVEC UNE BOBINE PRIMAIRE TRAPÉZOÏDALE

(30) Priority: 22.07.2015 US 201514806075; 14.05.2015 IN 1355DE2015
(43) Date of publication of application: 16.11.2016
(73) Proprietor: Honeywell International Inc., Morris Plains, NJ 07950 (US)
(72) Inventor: ESAKKI, Subramanian, Morris Plains, NJ 07950 (US); SANCHIHAR, Paresh, Morris Plains, NJ 07950 (US); ARAGANJI, Vijayshekhar, Morris Plains, NJ 07950 (US); NARASIMHAN, Kumaran Sena, Morris Plains, NJ 07950 (US)
(74) Representative: Houghton, Mark Phillip

(56) References cited:
- WO-A2-2010/019932
- CN-A- 104 465 044
- US-A- 3 054 976
- US-A- 3 235 790
- US-A- 4 282 485
- US-A1- 2005 046 416

## Description

### TECHNICAL FIELD

The present invention generally relates to transformer positions sensors, and more particularly relates to a differential transformer position sensor with a trapezoidal primary coil.

### BACKGROUND

Position sensors are included in various systems, devices, and environments. Moreover, various types of position sensors have been developed for inclusion into these various systems, devices, and environments. One particular type of position sensor that has been developed is the transformer position sensor. A transformer position sensor typically includes a primary coil, one or more secondary coils, and a movable magnetically permeable core. When the primary coil is electrically excited with an excitation signal, the secondary coil(s) is(are) inductively coupled to the primary coil and supplies an output signal that is based on the position of the movable core.

One particularly popular type of transformer position sensor is the variable differential transformer position sensor, which includes linear variable differential transformers (LVDTs) and rotary variable differential transformers (RVDTs). A variable differential transformer position sensor also includes a primary coil, a pair of secondary coils, and a movable magnetically permeable core. However, with variable differential transformer position sensors, the secondary coils are typically configured as a pair of differentially wound coils that may be electrically coupled in series.

Patent document number WO2010/019932A2 describes an ignition coil configured for electrical communication with a spark plug of an internal combustion engine. The ignition coil has a primary spool and a secondary spool. The primary spool has a bore and an outer surface with a low-voltage winding supported thereon. The secondary spool has a cavity with a magnetic core received therein and a substantially cylindrical outer surface. The secondary spool is received at least partially in the bore of the primary spool. A high-voltage winding is supported on the outer surface of the secondary spool. The high-voltage winding has discrete winding sectors spaced from one another along a length of the secondary spool.

Patent document number US2005/046416A1 describes a transducer for producing an output indicative of an axial displacement which comprises a housing having an axis with a core member which is axially moveable within housing. Wound around the outer surface of the housing is a primary winding comprising turns of an electrical conductor, and at least one secondary winding, comprising turns of a further electrical conductor. An AC signal supplied to the primary winding induces an output signal in the secondary winding dependent upon a position of the core member. The secondary winding has an axial distribution of turns such that the output signal induced is indicative of a trigonometric function of the axial displacement of the core member within the housing.

Patent document numbers US3235790A and US3054976A describe a moveable core transducer and differential transformer. The transformer position sensors described above are generally reliable and robust, but do suffer certain drawbacks. For example, the size, power consumption, and accuracy of presently known variable differential transformer position sensors do not meet the requirements for some end-use applications, most notably within in the aerospace industry.

Hence, there is a need for a variable differential transformer position sensor that can readily meet the size, power consumption, and accuracy requirements associated with, for example, aerospace industry applications. The present invention addresses at least this need.

### BRIEF SUMMARY

The present invention in its various aspects is as set out in the appended claims.

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a longer side of the the two parallel sides of the trapezoid is adjacent to the bobbin.

The transformer position sensor may relate to a linear variable differential transformer position sensor.

In yet another embodiment, a housing surrounds at least portions of the bobbin, the core, the primary coil, and the secondary coils. The primary coil is wound on the bobbin such that the primary coil has a cross section shape that is an isosceles trapezoid, and each secondary coil has a cross section shape that is a right triangle.

Furthermore, other desirable features and characteristics of the differential transformer position sensor will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified cross section view of one embodiment of a variable differential transformer position sensor;
FIGS. 2-4 depict simulation results for an embodiment of the differential transformer position sensor of FIG. 1 with a metal bobbin;
FIG. 5-7 depict simulation results for an embodiment of the differential transformer position sensor of FIG. 1 with a plastic bobbin;
FIGS. 8-10 depict actual physical results for an embodiment of the differential transformer position sensor of FIG. 1; and
FIG. 11 depicts a simplified cross section view of a primary coil wound on a bobbin to illustrate an example of a variable differential transformer position sensor.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

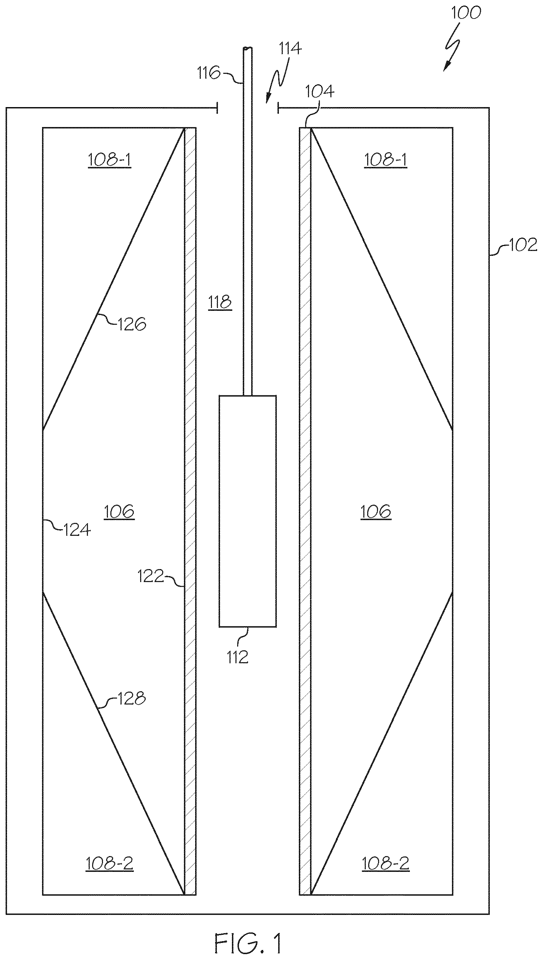

Referring first to FIG. 1, a simplified cross section view of one embodiment of a variable differential transformer position sensor 100 is depicted. The depicted sensor 100 includes a housing 102, a bobbin 104, a primary coil 106, and a pair of secondary coils 108 (108-1, 108-2), and a core 112. The housing 102 surrounds at least a portion of the bobbin 104, the primary coil 106, the secondary coils 108, and the core 112. The housing 102 preferably has an opening 114 in at least one end, through which a rod 116 or other suitable device extends and is coupled to the core 112.

The bobbin 104 has an axial bore 118 formed therein. It will be appreciated that the bobbin 104 may be formed of any one of numerous known materials. For example, it may be formed of any one of numerous known metals or metal alloys, or it may be formed of any one of numerous known plastic compositions.

The primary coil 106 is wound on the bobbin 104 and is adapted to be electrically excited with an excitation signal from a non-illustrated excitation signal source. The secondary coils 108 are disposed adjacent to the primary coil 106 such that each secondary coil 108 is inductively coupled to the primary coil 106 when the primary coil 106 is electrically excited. As a result, when the primary coil 106 is electrically excited with an excitation signal, the secondary coils 108 supply an output signal to a non-illustrated load.

The core 112 is movably disposed within the axial bore 118 and, as noted above, is coupled to the rod 116 (or other suitable device). The core 112 may be formed of any one of numerous known magnetically permeable materials and, in response to movement of the rod 116, translates axially within the axial bore 118. As is generally known, axial translation of the core 112 causes variations in the output signal supplied from the secondary coils 108. This variation in the output signal can, for example, be representative of the position of a device that is coupled, via the rod 116, to the core 112.

Still referring to FIG. 1, it is seen that the primary coil 106 is wound on the bobbin 104 such that it has cross sectional shape that is a non-parallelogram. More specifically, the primary coil 106 is wound such that it has a cross section shape that is a trapezoid. As is generally known, a trapezoid has two parallel sides - a longer side 122, and a shorter side 124 - and two non-parallel sides 126, 128. Although the cross section shape may be various trapezoid shapes, in a particular preferred embodiment the cross section shape is that of an isosceles trapezoid. This, as is also generally known, means that the non-parallel sides 126, 128 are equal in length.

In addition to the primary coil 106 being wound such that it has a non-parallelogram shaped cross section, the secondary coils 108 are wound such that each has a triangular cross section shape. Preferably, as FIG. 1 further depicts, the secondary coils 108 are wound around a different one of the non-parallel sides 126, 128 of the trapezoidal cross section of the primary coil 106. Moreover, each secondary coil 108 is preferably wound such that the cross section shape of each is a right triangle.

The cross section shapes of the primary and secondary coils 106, 108 provide several distinct advantages over presently known differential transformer position sensors. Specifically, the trapezoidal cross section shape of the primary coil 106 allows for a relatively higher number of primary coil turns, which provides a higher input impedance to meet input power requirements. The triangular cross section shape of the secondary coils 108 provides improved inductive coupling with both the primary coil 106 and the core 112, which improves output voltage and phase shift. These cross section shapes also take up less space, which allows for relatively shorter form factors (e.g., smaller space envelope) to be achieved. Lower gage (i.e., thicker) wire can be used, which allows for better manufacturing control and thus to better yield. Moreover, for a given package size (e.g., space envelope), relatively higher sensitivity and improved linearity can be achieved.

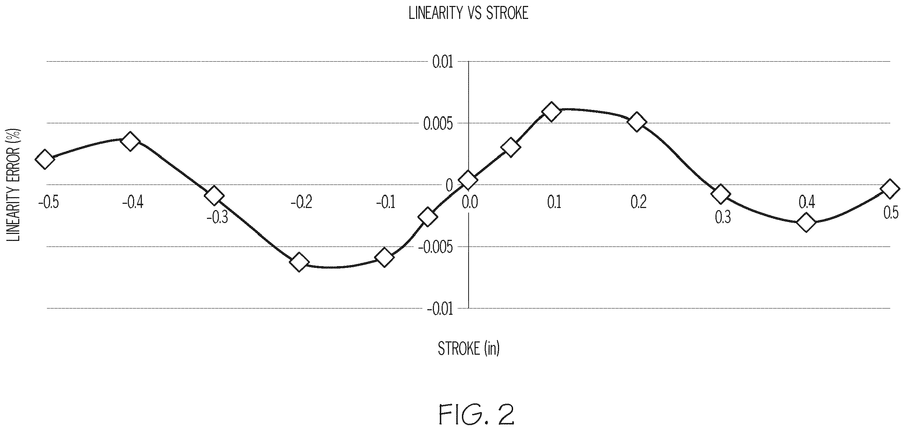

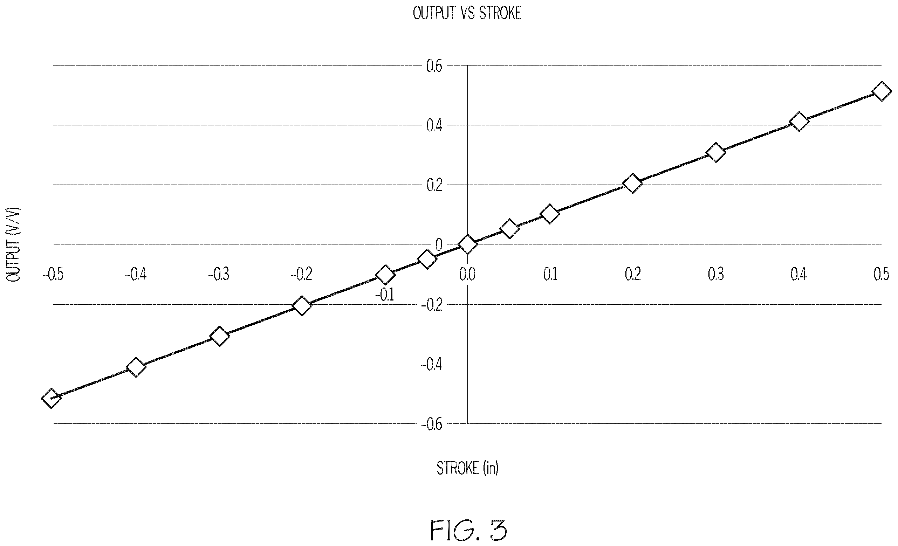

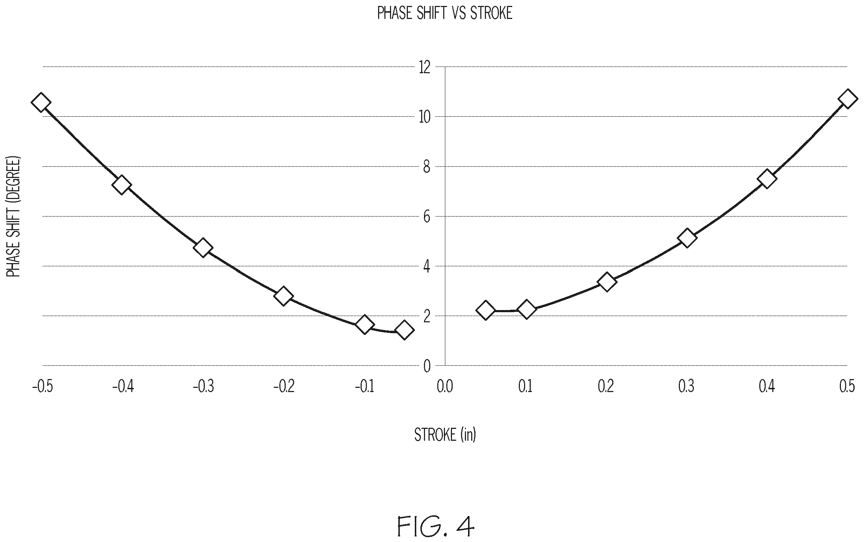

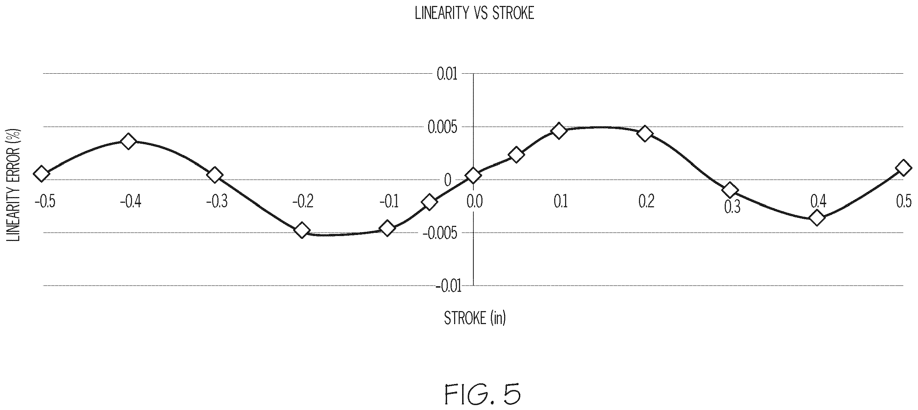

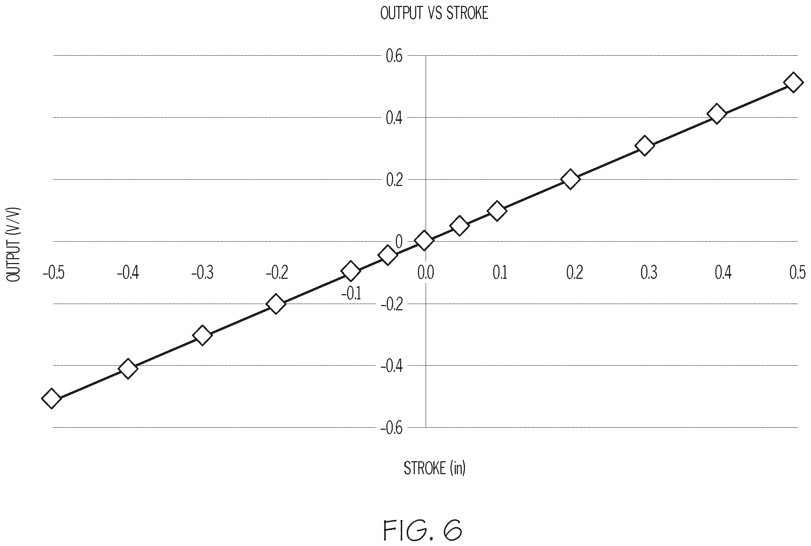

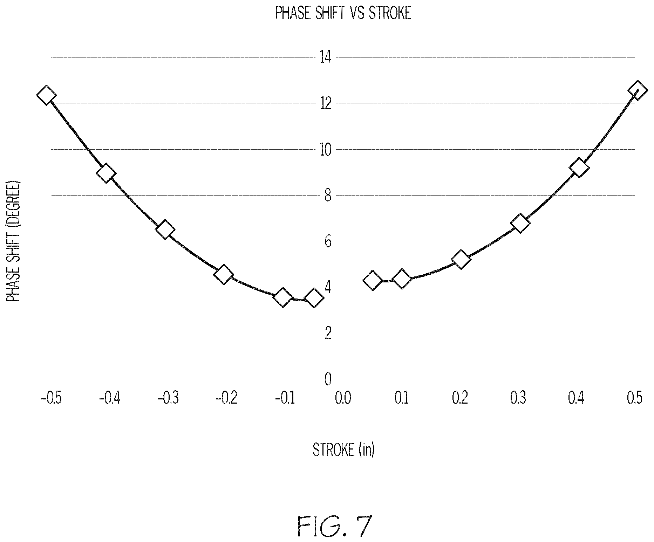

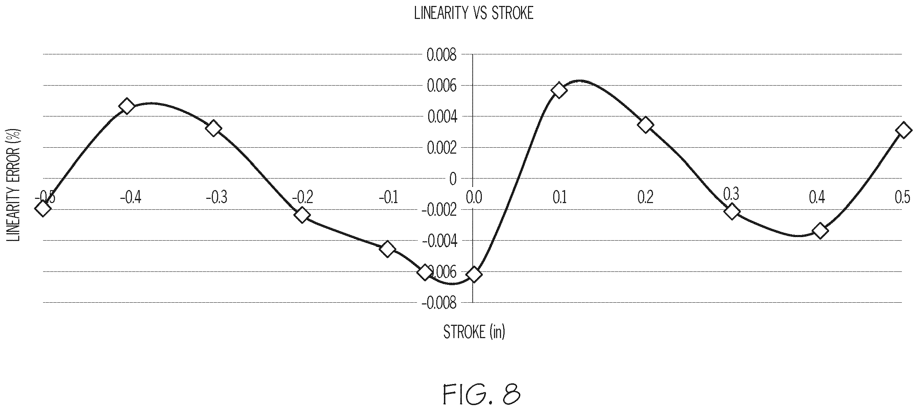

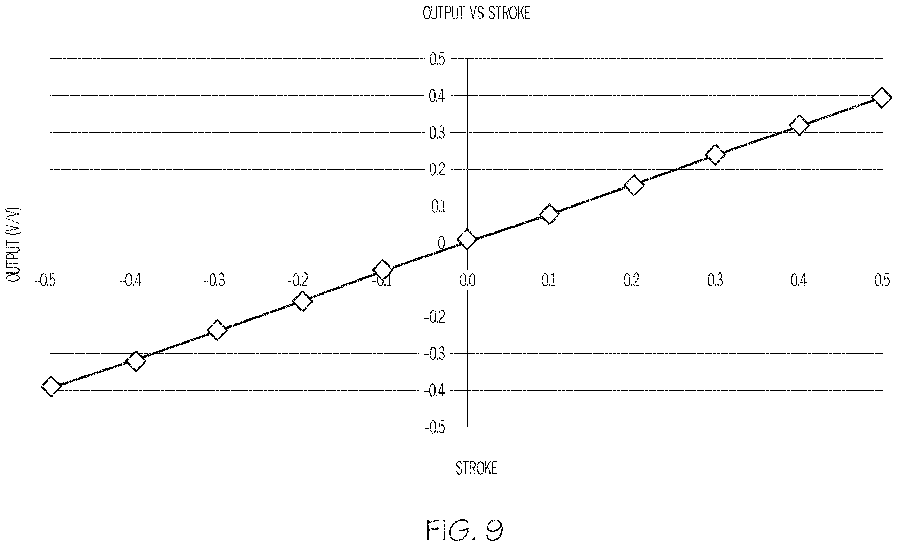

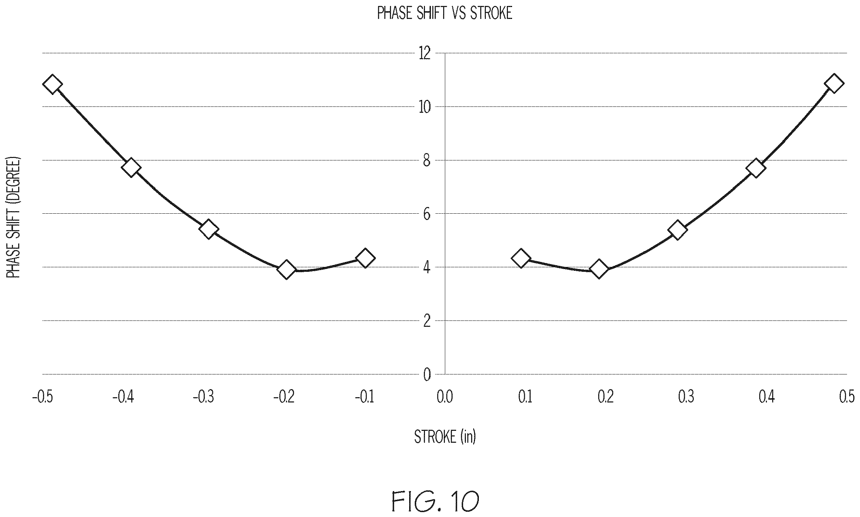

To provide some specific examples of the above improvements, it has been shown the when primary coil 106 is wound such that it has a trapezoidal cross section, the differential transformer position sensor exhibits an improvement in linearity by about 3 times over that of presently known sensors. The size envelope can be reduced by around 15%, input power consumption is reduced by about 200%, input DC resistance and impedance is improved by about 50%, and the overall manufacturing process time is improved by about 10%. Examples of the improvements in linearity, input power, and phase shift are illustrated in FIGS. 2-10. It should be noted that the graphs depicted in FIGS. 2-4 are simulation results for a differential transformer position sensor 100 with a metal bobbin 104, the graphs depicted in FIGS. 5-7 are simulation results for a differential transformer position sensor 100 with a plastic bobbin 104, and the graphs depicted in FIGS. 8-10 are actual physical results for a prototype differential transformer position sensor 100 with the primary and second coils 106, 108 wound as described herein.

It should be further noted that the dimensions of the trapezoidal cross section shape of the primary coil 106 may be varied to achieve desired and/or optimal performance. In particular, and with reference once again to FIG. 1, it may be appreciated that for a given length of the longer parallel side 122, the length of the shorter parallel side 124 may be varied to achieve a desired and/or optimal performance. Any variation in the length of the shorter parallel side 124 will, of course, vary the appropriate dimensions of the triangular cross section shapes of the secondary coils 108.

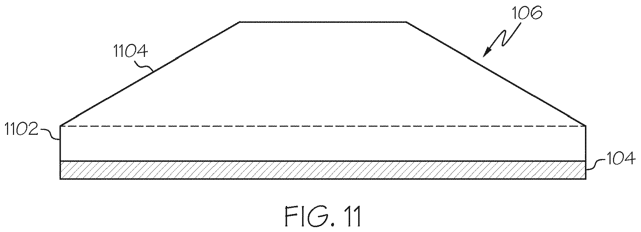

It was noted above that the primary coil 106 is wound on the bobbin 104 such that it has cross sectional shape as shown in.fig. 1. It will be appreciated that the primary coil 106 may, as an example, be wound on the bobbin 104 such that only a portion of the coil 106 is wound such that its cross section shape is a non-parallelogram, such as a trapezoid. Such an example is depicted in FIG. 11, in which the primary coil 106 is wound on the bobbin 104 such that a first portion 1102 has a cross sectional shape that is a parallelogram, such as a rectangle, and a second portion 1104 has a cross sectional shape that is a non-parallelogram, such as a trapezoid.

The differential transformer position sensor 100 described herein exhibits improved linearity, phase shift, power consumption, and accuracy relative to known sensors, while still meeting the size requirements associated with various aerospace industry applications.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A transformer position sensor (100), comprising:
a bobbin (104) having an axial bore (118) formed therein;
a core (112) movably disposed within the axial bore (118);
a primary coil (106) wound on the bobbin (104) and adapted to be electrically excited with an excitation signal; and
a pair of secondary coils(108) disposed adjacent to the primary coil (106), the secondary coils(108) inductively coupled to the primary coil (106) upon electrical excitation of the primary coil (106),
wherein the primary coil (106) is wound on the bobbin (104) such that the primary coil (106) has a cross section shape that is a trapezoid having two parallel sides (122, 124) and two non-parallel sides (126, 128).

2. The transformer (100) of claim 1, wherein each secondary coil (108) has a cross section shape that is a triangle.

3. The transformer (100) of claim 1, wherein the trapezoid is an isosceles trapezoid.

4. The transformer (100) of claim 3, wherein each secondary coil (108) has a cross section shape that is a right triangle.

5. The transformer (100) of claim 1, wherein:
each of the secondary coils (108) is wound around a different one of the non-parallel sides (126, 128).

6. The transformer (100) of claim 5, wherein each secondary coil (108) has a cross section shape that is a triangle.

7. The transformer (100) of claim 5, wherein the trapezoid is an isosceles trapezoid.

8. The transformer (100) of claim 7, wherein each secondary coil (108) has a cross section shape that is a right triangle.

9. The transformer (100) of any of claims 1 to 8, wherein the pair of secondary coils (108) comprises a pair of differentially wound secondary coils (108).

10. The transformer (100) of claim 1, further comprising:
a housing (102) surrounding at least portions of the bobbin (104), the core (112), the primary coil (106), and the secondary coils (108),
wherein the pair of secondary coils (108) comprises a pair of differentially wound secondary coils (108).

11. The transformer (100) of claim 10, wherein the primary coil (106) is wound on the bobbin (104) such that the primary coil (106) has a cross section shape that is an isosceles trapezoid.

12. The transformer (100) of claim 11, wherein each secondary coil (108) has a cross section shape that is a right triangle.

13. The transformer (100) of claim 12, wherein a longer side (122) of the two parallel sides (122, 124) is adjacent the bobbin (104).

14. The transformer (100) of claim 13, wherein each of the secondary coils (108) is wound around a different one of the non-parallel sides (126, 128).

## Patentansprüche

1. Positionssensor für Transformator (100), umfassend:
einen Spulenkörper (104) mit einer Axialbohrung (118), die darin ausgebildet ist;
einen Kern (112), der innerhalb der Axialbohrung (118) beweglich angeordnet ist;
eine Primärspule (106), die auf den Spulenkörper (104) gewickelt und so ausgelegt ist, dass sie mit einem Erregungssignal elektrisch erregt wird; und
ein Paar von Sekundärspulen (108), die benachbart zur Primärspule (106) angeordnet sind, wobei die Sekundärsplen (108) bei elektrischer Erregung der Primärspule (106) induktiv mit der Primärspule (106) gekoppelt werden,
wobei die Primärspule (106) derart auf den Spulenkörper (104) gewickelt ist, dass die Primärspule (106) eine Querschnittsform aufweist, die ein Trapez mit zwei parallelen Seiten (122, 124) und zwei nicht-parallelen Seiten (126, 128) ist.

2. Transformator (100), nach Anspruch 1, wobei jede Sekundärspule (108) eine Querschnittsform aufweist, die ein Dreieck ist.

3. Transformator (100) nach Anspruch 1, wobei das Trapez ein gleichschenkliges Trapez ist.

4. Transformator (100), nach Anspruch 3, wobei jede Sekundärspule (108) eine Querschnittsform aufweist, die ein rechtwinkliges Dreieck ist.

5. Transformator (100) nach Anspruch 1, wobei:
jede der Sekundärspulen (108) um eine andere der nicht-parallelen Seiten (126, 128) gewickelt ist.

6. Transformator (100), nach Anspruch 5, wobei jede Sekundärspule (108) eine Querschnittsform aufweist, die ein Dreieck ist.

7. Transformator (100) nach Anspruch 5, wobei das Trapez ein gleichschenkliges Trapez ist.

8. Transformator (100), nach Anspruch 7, wobei jede Sekundärspule (108) eine Querschnittsform aufweist, die ein rechtwinkliges Dreieck ist.

9. Transformator (100) nach einem der Ansprüche 1 bis 8, wobei das Paar von Sekundärspulen (108) ein Paar von differenziell gewickelten Sekundärspulen (108) umfasst.

10. Transformator (100) nach Anspruch 1, ferner umfassend:
ein Gehäuse (102), das wenigstens Teile des Spulenkörpers (104), des Kerns (112), der Primärspule (106) und der Sekundärspulen (108) umgibt,
wobei das Paar von Sekundärspulen (108) ein Paar von differenziell gewickelten Sekundärspulen (108) umfasst.

11. Transformator (100) nach Anspruch 10, wobei die Primärspule (106) derart auf den Spulenkörper (104) gewickelt ist, dass die Primärspule (106) einen Querschnitt aufweist, der ein gleichschenkliges Trapez ist.

12. Transformator (100) nach Anspruch 11,
wobei jede Sekundärspule (108) eine Querschnittsform aufweist, die ein rechtwinkliges Dreieck ist.

13. Transformator (100) nach Anspruch 12,
wobei eine längere Seite (122) der beiden parallelen Seiten (122, 124) benachbart zum Spulenkörper (104) ist.

14. Transformator (100) nach Anspruch 13, wobei jede der Sekundärspulen (108) um eine andere der nicht-parallelen Seiten (126, 128) gewickelt ist.

## Revendications

1. Capteur de position (100) à transformateur, comprenant :
une bobine (104) dans laquelle est ménagé un alésage axial (118) ;
un noyau (112) placé mobile à l'intérieur de l'alésage axial (118) ;
un enroulement primaire (106) enroulé sur la bobine (104) et adapté à être excité électriquement par un signal d'excitation ; et
une paire d'enroulements secondaires (108) placé adjacents à l'enroulement primaire (106), les enroulements secondaires (108) étant couplés inductivement à l'enroulement primaire (106) lors d'une excitation électrique de l'enroulement primaire (106),
l'enroulement primaire (106) étant enroulé sur la bobine (104) de manière à ce que l'enroulement primaire (106) présente, en section transversale, la forme d'un trapézoïde possédant deux côtés parallèles (122, 124) et deux côtés non parallèles (126, 128).

2. Transformateur (100) selon la revendication 1, dans lequel chaque enroulement secondaire (108) présente, en section transversale, la forme d'un triangle.

3. Transformateur (100) selon la revendication 1, dans lequel le trapézoïde est un trapézoïde isocèle.

4. Transformateur (100) selon la revendication 3, dans lequel chaque enroulement secondaire (108) présente, en section transversale, la forme d'un triangle rectangle.

5. Transformateur (100) selon la revendication 1, dans lequel :
chacun des enroulements secondaires (108) est enroulé autour d'un côté différent des côtés non parallèles (126, 128).

6. Transformateur (100) selon la revendication 5, dans lequel chaque enroulement secondaire (108) présente, en section transversale, la forme d'un triangle.

7. Transformateur (100) selon la revendication 5, dans lequel le trapézoïde est un trapézoïde isocèle.

8. Transformateur (100) selon la revendication 7, dans lequel chaque enroulement secondaire (108) présente, en section transversale, la forme d'un triangle rectangle.

9. Transformateur (100) selon l'une quelconque des revendications 1 à 8, dans lequel la paire d'enroulements secondaires (108) comprend une paire d'enroulements secondaires enroulés différentiellement (108) .

10. Transformateur (100) selon la revendication 1, comprenant en outre :
un boîtier (102) entourant au moins des parties de la bobine (104), du noyau (112), de l'enroulement primaire (106) et des enroulements secondaires (108),
la paire d'enroulements secondaires (108) comprenant une paire d'enroulements secondaires enroulés différentiellement (108).

11. Transformateur (100) selon la revendication 10, dans lequel l'enroulement primaire (106) est enroulé sur la bobine (104) de manière à ce que l'enroulement primaire (106) présente, en section transversale, la forme d'un trapézoïde isocèle.

12. Transformateur (100) selon la revendication 11, dans lequel chaque enroulement secondaire (108) présente, en section transversale, la forme d'un triangle rectangle.

13. Transformateur (100) selon la revendication 12, dans lequel un plus long côté (122) des deux côtés parallèles (122, 124) est adjacent à la bobine (104).

14. Transformateur (100) selon la revendication 13, dans lequel chacun des enroulements secondaires (108) est enroulé autour d'un côté différent des côtés non parallèles (126, 128).
